# NEUE EUROPÄISCHE PATENTSCHRIFT

(11) **EP 1 509 709 B2**
(45) Veröffentlichungstag und Bekanntmachung des Hinweises auf die Entscheidung über den Einspruch: **10.11.2010**
(45) Hinweis auf die Patenterteilung: 16.01.2008
(21) Anmeldenummer: 03714679.2
(22) Anmeldetag: 06.03.2003
(51) Int. Cl.: F16H 61/02, F16H 59/02

(54) **VERFAHREN ZUR KONFIGURATION EINER GETRIEBESTEUERUNG FÜR KRAFTFAHRZEUGE**
METHOD FOR CONFIGURING A TRANSMISSION CONTROL FOR MOTOR VEHICLES
PROCEDE DE CONFIGURATION D'UNE COMMANDE DE BOITE DE VITESSES POUR AUTOMOBILES

(30) Priorität: 22.05.2002 DE 10222665
(43) Veröffentlichungstag der Anmeldung: 02.03.2005
(73) Patentinhaber: ROBERT BOSCH GMBH, 70442 Stuttgart (DE)
(72) Erfinder: LUH, Joachim, 74321 Bietigheim-Bissingen (DE)
(86) Internationale Anmeldenummer: PCT/DE2003/000702
(87) Internationale Veröffentlichungsnummer: WO 2003/098075

(56) Entgegenhaltungen:
- EP-A- 0 513 424
- EP-A- 1 045 173
- EP-A2- 1 096 350
- WO-A-01/86175
- DE-A1- 4 033 574
- DE-A1- 10 052 881
- DE-A1- 10 134 997
- DE-A1- 10 140 746
- FR-A- 2 699 978

## Beschreibung

### Technisches Gebiet

Bei Kraftfahrzeugen kommen vermehrt Automatikgetriebe zum Einsatz, um den Fahrer, insbesondere im Großstadtverkehr von Gangwechseloperationen zu entlasten, die seine Aufmerksamkeit vom Verkehrsgeschehen ablenken könnten. Automatikgetriebe neuerer Generation sind einfacher und sicherer zu handhaben. Über eine fahrerseitig vorzunehmende Auswahl an einem Bedienschalter oder an einem Taster, kann die Getriebesteuerung von Automatikgetrieben hinsichtlich der Fahrtmodi "Sport" oder "Comfort" beeinflusst werden.

### Stand der Technik

DE 199 63 782 A1 bezieht sich auf eine Steuerung für ein Fahrzeug mit einer Getriebesteuerung. Eine Vielzahl elektrischer Schaltelemente, wie zum Beispiel ein Kickdown-Schalter, ein Bremslichtschalter oder ein Wählhebelpositionsschalter tauschen mit einer Getriebesteuerung Signale aus. Gleiches gilt für andere Schaltelemente, wie zum Beispiel einen Handbetriebsschalter (Manual-Mode-Switch), einen Hochschaltsignalgeber oder einen Rückschaltsignalgeber sowie für einen Programmschalter (Economy-Sport-Switch). Die zugehörigen Signalleitungen werden zu einem Steuergerät geführt, welches mit einem seriellen Bussystem (CAN) verbunden ist. Die zusammengefassten, übertragenen Signale werden über den Datenbus CAN zu der Getriebesteuerung geleitet.

DE 44 41 896 A1 bezieht sich auf die Steuerung für ein Kraftfahrzeug mit einem automatischen Getriebe. Die Getriebesteuerung des Kraftfahrzeuges ist durch Signalleitungen mit einem Wählhebel, einem Kickdown-Schalter und einem Fahrprogrammwählschalter mit der Getriebesteuerung verbunden. Über diese Schnittstellen gibt der Fahrer des Kraftfahrzeuges seine Befehle oder Wünsche in die Getriebesteuerung ein. Die Anwahl von Fahrstufen P, R, N, S, 1 und 2 erfolgt über den Wählhebel, die Anforderung einer starken Beschleunigung über den Kickdown-Schalter sowie die Auswahl zwischen einem "Economy"- und einem "Sport"-Fahrprogramm über den Fahrprogrammauswählschalter.

Aus der automobiltechnischen Zeitschrift Band 95, Jahr 1993, Seite 420 ff. "Die adaptive Getriebesteuerung für BMW-Automobile" geht eine adaptive Getriebesteuerung (AGS) hervor, mit welcher die Übersetzung des Getriebes an das Verhalten des Fahrers und die jeweils herrschenden Umweltbedingungen angepasst werden kann. Die adaptive Getriebesteuerung AGS wertet darüber hinaus eine Vielzahl weiterer Parameter aus. Den stärksten Einfluss auf die Gangwahl hat hierbei das Gaspedal. So werden bei schneller Rücknahme des Gaspedals Hochschaltungen verhindert bzw. beim vollständigen Niedertreten Rückschaltungen ausgelöst (Kick-down). Neben diesen offenkundigen Funktionen umfasst die AGS eine Vielzahl weniger auffälliger Merkmale die in verschiedensten Fahrsituationen ihren Beitrag zu einer intelligenten Gangwahl beisteuern. Neben der Gangwahl werden von der Getriebesteuerung die Abläufe der Schaltvorgänge kontrolliert, diverse Sicherheitsfunktionen abgearbeitet und eventuelle aufgetretene Fehler für die anschließende Diagnose dokumentiert. Die Vielzahl der komplexen Aufgaben erfordert den Einsatz einer hochentwickelten Hardware und einer umfangreichen Software. Bislang wurde die Gangwahl von Automatikgetrieben unter Berücksichtigung des Drosselklappenwinkels, der Drehzahl am Getriebeausgang, der Stellung von Kick-down- und Wählhebelschalter sowie der Betätigung des Programmwahltasters getroffen. Nur wenige neue Informationen wurden dem Steuergerät zur Verfügung gestellt, um die zusätzlichen Aspekte berücksichtigen zu können, welche die AGS zur Optimierung der Gangwahl heranzieht. Eine Neuerung besteht in der Verarbeitung der Vierraddrehzahl-Informationen, die über das ABS-Steuergerät geliefert werden. Aus diesen Werten lassen sich die Längs- und Querbeschleunigungen des Fahrzeuges sowie der Schlupf der Antriebsräder ableiten. Ferner wird der Bremslichtschalter abgefragt um die Betätigung des Bremspedales zu erkennen. In Automobilen, die mit einer automatischen Stabilitätscontrol (ASC) ausgestattet sind, wird außerdem der Taster abgefragt, mit dem der Fahrer dieses System deaktivieren kann. Um aus den diversen Eingangsinformationen das geeignete Übersetzungsverhältnis abzuleiten, müssen in der Getriebesteuerung zwei wesentliche Aufgaben, nämlich die Schaltprogramm- u. Gangauswahl abgearbeitet werden. Zunächst ist ein Schaltprogramm festzulegen. Bei herkömmlichen Getriebesteuerungen geschieht dies dadurch, dass der Fahrer mit dem Programmwahltaster aus einem überschaubaren Angebot zum Beispiel Economy-, Sport- und Winterprogramm auswählt. Bei einer Auswahl von neun Schaltprogrammen wäre der Fahrer jedoch überfordert, so dass eine Unterstützung von der Softwareseite erfolgen sollte. Dazu sind im Rahmen der adaptiven Getriebesteuerung AGS Funktionen eingeführt worden, die aufgrund der messbaren Aktionen des Fahrers eine Bewertung seines Verhaltens durchführen. Es erfolgt eine Analyse der Stellung und der Bewegung des Gaspedales, eine Analyse der aktuellen Fahrgeschwindigkeit, die Betätigung des Kick-down-Schalters und Auftreten der Querbeschleunigungen. Die Verknüpfung dieser Informationen liefert eine "Fahrertyp-Kennzahl", welche zum Aufruf eines von vier Grundprogrammen führt. Unter besonderen Umweltbedingungen kommen spezielle Sonderprogramme zum Einsatz. So wird auf glatter Fahrbahn ein Winter-Schaltprogramm verwendet um Traktion und Fahrstabilität zu erhöhen. Beim Befahren von Steigungsstrecken oder bei außergewöhnlicher Beladung werden fahrleistungsorientierte Programme eingesetzt, die unter diesen Bedingungen zur Reduzierung der Schalthäufigkeit beitragen können.

Unter Zugrundelegung des ermittelten Programmes wird anschließend die Gangwahl getroffen. Über Hoch- und Rückschaltkennlinien wird dazu ein Zusammenhang zwischen den Messwerten Fahrgeschwindigkeit bzw. Drosselklappenwinkel an den Gangwechseln hergestellt. Die Schaltkennlinien sind grundsätzlich so beschaffen, dass Hochschaltungen durch Rücknahme des Gaspedales oder steigende Geschwindigkeit - Rückschaltungen durch Niedertreten des Gaspedales oder Reduzierung der Geschwindigkeit - initiiert werden. Der feste Zusammenhang zwischen Schaltkennlinie und Gangwahl wird durch einige Funktionen der adaptiven Getriebesteuerung AGS aufgehoben. So können Hochschaltungen verhindert werden die laut Kennlinien stattfinden würden oder es können Rückschaltungen ausgelöst werden auch wenn keine Rückschaltkennlinie überschritten wurde.

Aus der EP 1 045 173 A ist ein Verfahren zur Konfiguration eines elektronischen Getriebestenergerätes eines automatischen Getriebes bekannt, wobei Schaltprogramme in der Automatikschaltgasse ausgewählt werden. Ein Schaltprogramm kann individuell geändert werden.

### Darstellung der Erfindung

Mit der erfindungsgemäßen Lösung wird erreicht, dass eine elektronische Getriebesteuerung für eine Automatikgetriebe eines Kraftfahrzeuges über ein Fahrerinformationssystem im Fahrzeug auf einfacher Weise fahrerindividuell konfiguriert werden kann. Bisher kann an automatischen Getrieben zwischen einem Betriebsmodus "Sport" und einem Betriebsmodus "Economy" und einem an winterliche Straßenverhältnisse angepassten Betriebsmodus gewählt werden. Mit der erfindungsgemäß vorgeschlagenen Lösung können die verschiedenen, von der elektronischen Getriebesteuerung angebotenen Schaltprogramme fahrerindividuell konfiguriert, d. h. angepasst werden. Die Kriterien, nach denen in der elektronischen Getriebesteuerung die geeignete Übersetzung des Automatikgetriebes festgelegt wird, können durch den Fahrer individuell beeinflusst werden. Die einzelnen Kriterien können durch den Fahrer aktiviert, deaktiviert oder auch verändert werden.

Durch ein dem Fahrerinformationssystem unterlegtes Steuergerät kann zum Beispiel ein sportliches Schaltprogramm aktiviert oder deaktiviert werden. Es wird in der Regel zu einem Zeitpunkt immer nur ein Schaltprogramm aktiviert (Economy, Sport, Fast-off, Kickdown), da das Automatikgetriebe einen Gang auswählen muss. Bei CVT-Automatikgetrieben kann es sich anders verhalten, da feinere Abstufungen der einstellbaren Gänge möglich sind. Die Funktionen "Wandlerüberbrückungskupplung" und "Standabkopplung" sind vom einzulegenden Gang unabhängig.

Innerhalb eines "Sport"-Schaltprogramms kann zum Beispiel die Anzahl der im Schaltprogramm verwendeten Gänge festgelegt werden sowie die Schaltbedingungen, an denen das Automatikgetriebe hoch- bzw. herunterschaltet. Ferner lässt sich innerhalb eines Schaltprogrammes die Geschwindigkeit des Gangwechsels festlegen, so dass die standardmäßig vorgesehene Geschwindigkeit des Gangwechsels individuell variiert und an den Fahrstil angepasst werden kann.

Durch die Vorgabe des Fahrers kann weiterhin ein Kickdown-Schaltprogamm aktiviert oder deaktiviert werden. Dies kann innerhalb eines Schaltprogrammes, welches einer ökonomisch orientierten Fahrweise Rechnung trägt, zu einer gänzlichen Deaktivierung des Kickdown-Schaltprogramm-Bausteines führen. Des Weiteren kann eine Fast-off-Schaltfunktion, die immer dann wirksam wird, sobald der Fahrer das Gaspedal schnell loslässt, aktiviert oder deaktiviert werden. Innerhalb des Fast-off-Schaltprogramms kann durch die Konfigurierbarkeit der elektronischen Getriebesteuerung ein Schwellwert herunter- oder heraufgesetzt werden, durch dessen Über- oder Unterschreiten die Fast-off-Funktion aktiviert bzw. deaktiviert wird. Durch die Fast-off-Funktion lässt sich ein Hochschalten des Getriebes verhindern oder die Anzahl der hochgeschalteten Gänge reduzieren.

Für Fahrten im Gebirge, so zum Beispiel lange Steigungsfahrten (Passfahrten) kann der Fahrer zum Beispiel ein Berg-Schaltprogramm aktivieren, was um eine Funktion "Fahren mit oder ohne Anhänger" erweitert werden kann. Dieses Schaltprogramm lässt sich sowohl um ein Kurven-Schaltprogramm als auch um ein Bergab-Schaltprogramm und/oder ein Winterschaltprogramm ergänzen. Der Fahrer kann demnach die Betriebsweise eines Automatikgetriebes nach seinen individuellen Bedürfnissen konfigurieren und durch Vorwahl die Umstände weitestgehend berücksichtigen, unter denen sein Kraftfahrzeug demnächst betrieben wird. Eine Aktivierung der Funktionen Bergabfahrt/kurvenreiche Strecke/Betrieb mit Anhänger kombiniert mit dem Winterschaltprogramm, vermag den Fahrer bei Passfahrten im Gebirge bei winterlichen Straßenverhältnissen mit angehängtem Wohnwagen weitestgehend von Routinetätigkeiten zu entlasten, so dass dieser dem Verkehrsgeschehen seine ungeteilte Aufmerksamkeit widmen kann.

Bei CVT-Automatikgetrieben gibt es theoretisch unendlich viele Übersetzungen, d. h. Gänge. Um ein manuelles Schalten des Fahrers zu ermöglichen, wird ein 5-6- oder gar 7-Gang-Schaltgetriebe nachgebildet. Die Anzahl der vom Fahrer wählbaren Kombinationen aus Fahrzeuggeschwindigkeit und Getriebeübersetzung wird beschränkt auf die jeweils nachgebildeten 5, 6, oder 7 Gänge.

Die dargestellten, beispielhaft beschriebenen Konfigurationsmöglichkeiten von Getriebeschaltprogrammen eines Automatikgetriebes werden in einen Ausführung über ein Auswahlmenü an einem Display des Fahrerinformationssystemes innerhalb des Fahrzeuges vorgenommen. Anstatt über ein fest im Kraftfahrzeug installiertes Fahrerinformationssystem wird die Konfiguration über eine mobile Schnittstelle in Gestalt eines Mobiltelefones oder über einen PDA (Personal-Digital-Assistant) erfolgen. Diese Komponenten können über eine gemeinsame Schnittstelle (Blue tooth) mit dem Getriebesteuergerät eines Automatikgetriebes Daten zu dessen fahrerindividueller Konfiguration austauschen. Die eine fahrerindividuelle Schaltprogrammkonfiguration definierenden Daten können auch auf eine Chip-Karte gespeichert werden, die eine nutzerabhängige Einstellung eines Schaltprogrammes für eine elektronische Getriebesteuerung ermöglicht.

Die Konfiguration des Schaltprogrammes kann zum Beispiel nach Einschalten der Zündung vom Steuergerät des Fahrerinformationssystems unmittelbar an die elektronische Getriebesteuerung übermittelt werden. Änderungen der Konfiguration werden im laufenden Betrieb an die elektronische Getriebesteuerung übermittelt. Die Kommunikation zwischen der elektronischen Getriebesteuerung des Automatikgetriebes und dem Fahrerinformationssystem erfolgt zum Beispiel mittels eines seriellen Bussystems (CAN), der den Signalaustausch zwischen den Steuergeräten des Fahrerinformationssystems und des automatischen Getriebes durchführt.

### Zeichnung

Anhand der Zeichnung wird die Erfindung nachstehend eingehender erläutert.

Es zeigt:
- Figur 1: ein elektronisch gesteuertes Getriebesteuergerät für ein Automatikgetriebe, welches über einen bidirektional arbeitenden Bus vom Steuergerät eines Fahrerinformationssystems her konfigurierbar ist,
- Figur 2: die aktivierbaren/deaktivierbaren/veränderbaren Funktionen eines Schaltprogrammes, die durch das Fahrerinformationssystem beeinflussbar sind und
- Figur 3: die Schaltprogrammfunktionen in hierarchischer Anordnung, zu einzelnen "Funktionspaketen" zusammengefasst, die durch den Fahrer individuell beeinflussbar sind.

### Ausführungsvarianten

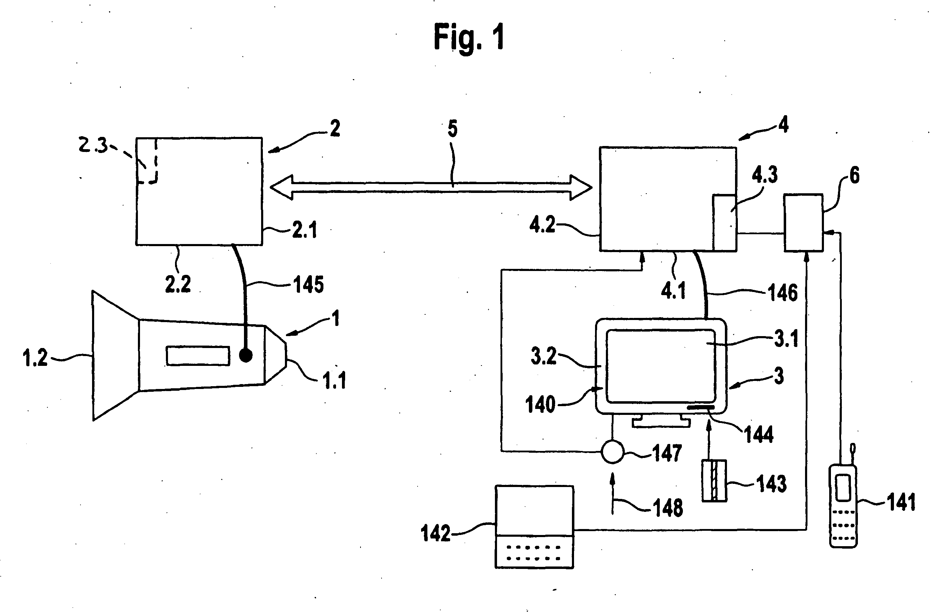

Fig. 1 ist ein elektronisch gesteuertes Getriebesteuergerät 2 für ein Automatikgetriebe 1 entnehmbar, welches über einen bidirektionalen Datenbus (CAN) im Fahrzeug über das Steuergerät 4 eines Fahrerinformationssystemes 3 fahrerindividuell konfiguriert werden kann.

Einem automatischen Getriebe eines Kraftfahrzeuges, welches als ein Stufenautomat AT als automatisiertes Schaltgetriebe ASG oder als stufenloses Automatgetriebe CVT beschaffen sein kann, ist ein elektronisches Getriebesteuergerät 2 zugeordnet. Am automatischen Getriebe 1 ist die Antriebsseite mit Bezugszeichen 1.2 bezeichnet; an dieser Schnittstelle überträgt der Motor sein Drehmoment an das automatische Getriebe 1, während die dem Antriebsstrang, d. h. dem Achsantrieb zugewandte Abtriebsseite des automatischen Getriebes 1 mit Bezugszeichen 1.1 bezeichnet ist. Das elektronische Getriebesteuergerät 2 und das automatische Getriebe 1 stehen über Signal- und Steuerleitungen 145 in Verbindung miteinander. Das Steuergerät 4 sowie das Fahrerinformationssystem 3 können eine Einheit bilden nämlich das Fahrerinformationssystem. Das Steuergerät 2 und das Getriebe 1 lassen sich ebenfalls als eine bauliche Einheit, nämlich als Automatikgetriebe betrachten. Das elektronische Steuergerät 4 kann eine Schnittstelle für ein Mobiltelefon bzw. einen PDA in Fig. 1 mit Position 4.3 bezeichnet umfassen, welches über einen Kommunikationsbaustein 6 für Mobiltelefon/PDA adressierbar ist. Der Kommunikationsbaustein 6 kann sowohl über das Mobiltelefon 141, als auch den PDA 142, wie in Fig. 1 schematisch angedeutet, adressiert werden. Die dem automatischen Getriebe 1 zuweisende Seite, d. h. die Ausgangsseite des elektronischen Getriebesteuergerätes 2 ist mit Bezugszeichen 2.2 bezeichnet, während die einem fahrzeuginternen Bussystem zuweisende Seite des elektronischen Getriebesteuergerätes 2 mit Bezugszeichen 2.1 identifiziert ist.

Innerhalb eines Kraftfahrzeuges kann das elektronische Getriebesteuergerät 2 über ein serielles Bussystem 5 (CAN) mit einem elektronischen Steuergerät in Verbindung stehen und über dieses serielle Bussystem Daten mit diesem austauschen. Das elektronische Steuergerät 4 des Fahrerinformationssystemes seinerseits steht über weitere Steuer- und Signalleitungen 146 mit einem im Fahrzeug fest installierten Fahrerinformationssystem 3 in Verbindung, dessen Bildschirmfläche in Fig. 1 schematisch dargestellt ist. Die einem interaktiven Fahrerinformationssystem 3 zuweisende Seite des elektronischen Steuergerätes 4 ist mit Bezugszeichen 4.1 bezeichnet, während die eingangsseitig dem seriellen Bussystem 5 gegenüberliegende Seite des elektronischen Steuergerätes 4 des interaktiven Fahrerinformationssystems 3 mit Bezugszeichen 4.2 gekennzeichnet ist. Das im Fahrzeug integrierte serielle Bussystem 5 tauscht Informationen und Daten in beide Richtungen zwischen dem elektronischen Getriebsteuergerät 2 und dem elektronischen Steuergerät 4 aus, d. h. ist demnach bidirektional beschaffen.

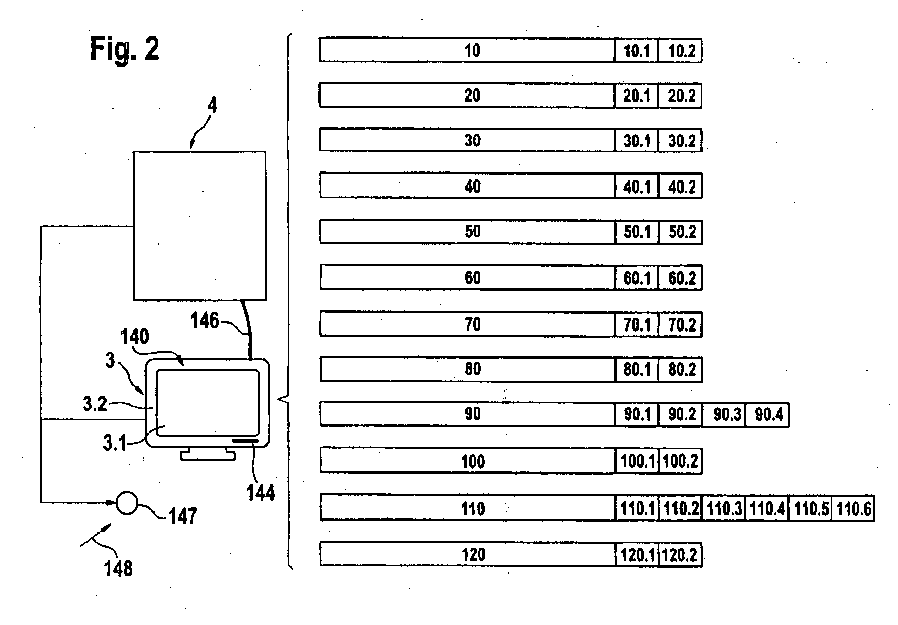

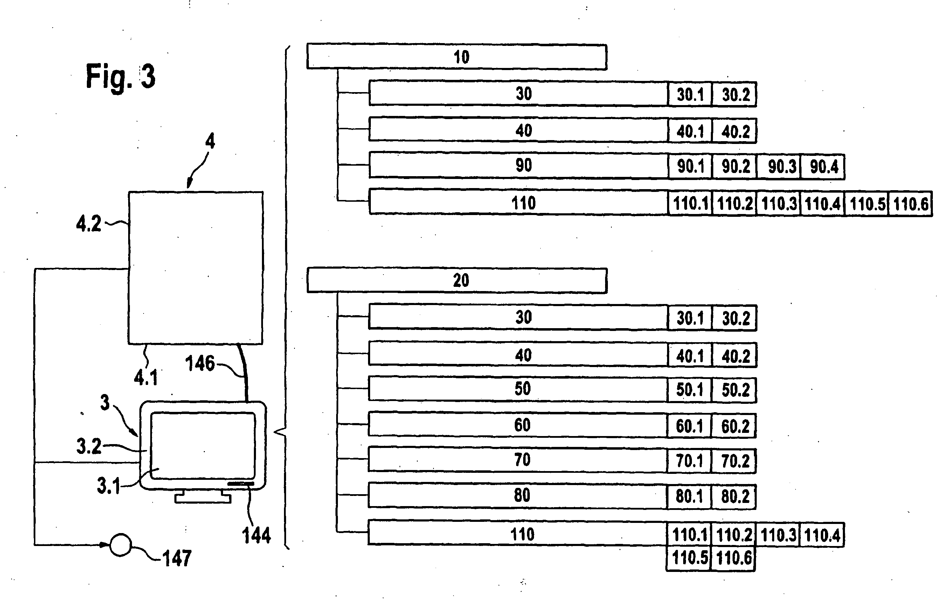

Das im Fahrzeug fest installierte interaktive Fahrerinformationssystem 3 umfasst ein Display 3.1, welches beispielsweise als Touchscreen 3.2 ausgebildet ist. Auf dem Display 3.1 des interaktiven Fahrerinformationssystems 3 werden Konfigurationskriterien (vgl. Darstellung gemäß Fig. 2 und 3) in Menüform 140 angeboten, aus denen der Benutzer des Kraftfahrzeuges eine benutzerindividuelle Konfiguration von Schaltprogrammen zusammenstellen kann, die an das elektronische Getriebesteuergerät 2 übermittelbar sind und einen Fahrbetrieb des Kraftfahrzeuges entsprechend der benutzerindividuell vorgenommenen Vorgaben ermöglichen.

Das Display 3.1 des interaktiven Fahrerinformationssystemes 3 kann einerseits während der Fahrt als Navigationssystem-Bildschirm benutzt werden, während andererseits vor Beginn einer jeden Fahrt, sei es eine Stadtfahrt, sei es eine Überlandfahrt, sei es eine Urlaubsfahrt ins Gebirge, um nur einige mögliche Beispiele zu nennen, über das im Display 3.1 anzeigbare Auswahlmenü 140 die elektronische Getriebesteuereinheit 2 des automatischen Getriebes 1 individuell konfiguriert werden kann. Neben einer Eingabe individueller Getriebekonfigurationen zur Übermittlung über das serielle Bussystem 5 an das elektronische Getriebesteuergerät 2, kann die Eingabe der gewünschten Getriebe-Schaltprogrammkonfiguration über eine Spracheingabe 148 ermöglichende Schnittstelle, wie beispielsweise einem Mikrofon 147 am interaktiven Fahrerinformationssystem 3 vorgenommen und an das elektronische Steuergerät 4 übermittelt werden. Neben der Spracheingabe über ein als Mikrofon gestaltete Sprachschnittstelle 147 kann über eine, in einen Einführschlitz 144 am interaktiven Fahrerinformationssystem 3 einführbare Chipkarte 143 eine benutzerindividuell gewünschte Getriebekonfiguration über die Signalleitung 146 an das elektronische Steuergerät 4 und über den mit dem elektronischen Getriebesteuergerät 2 in Verbindung stehenden Datenbus 5 an das elektronische Getriebesteuergerät 2 übermittelt werden.

Anstelle einer Konfiguration eines elektronischen Getriebesteuergerätes 2 über ein im Fahrzeug fest installiertes interaktives Fahrerinformationssystem 3 ist auch eine direkte Adressierung einer Schnittstelle 2.3 am elektronischen Getriebesteuergerät 2 über einen Personal-Digital-Assistant (PDA) 142 oder über ein Mobiltelefon 141 denkbar. Über die am elektronischen Getriebesteuergerät 2 vorsehbare optionale Schnittstelle 2.3 können sowohl auf dem Display des Personal-Digital-Assistant 142 (PDA) als auch auf dem Display des Mobiltelefones 141 die Bandbreite der zur Verfügung stehenden auswählbaren Schaltpramme angezeigt werden, die vom Benutzer über Bestätigungs- bzw. Quittierungssignale entweder chronologisch oder sequentiell oder in hierarchischen Paketen vorher zusammengestellt durchlaufen werden können, wobei die einzelnen auswählbaren Schaltprogramme deaktiviert, aktiviert oder hinsichtlich ihrer Betriebsparameter wie zum Beispiel Geschwindigkeit des Gangwechsels bzw. einer Gangzahlvorwahl, konfigurierbar sind.

Demnach stehen dem Benutzer eine als Touchscreen 3.2 beschaffene Benutzeroberfläche eines interaktiven Fahrerinformationssystemes 3 zur Konfiguration des elektronischen Getriebesteuergerätes 2, eine Spracheingabe über ein als Mikrofon gestaltete Schnittstelle 147 am interaktiven Fahrerinformationssystem 3, ein Einführschlitz 144 zum Einführen einer Chipkarte 143 mit gespeicherter gewünschter Schaltprogrammkonfiguration zur Verfügung, sowie in Gestalt eines Mobiltelefones 141 bzw. eines Personal-Digital-Assistant 142 zwei mobile Konfigurationsmöglichkeiten, falls der Benutzer eine solche Konfigurationsmöglichkeit der Schaltprogramme eines automatischen Getriebes 1 über ein elektronisches Getriebesteuergerät 2 vorziehen sollte.

Fig. 2 zeigt die aktivierbaren/deaktivierbaren/veränderbaren Funktionen eines Schaltprogrammes, von Schaltprogrammbausteinen, die durch ein interaktives Fahrerinformationssystem beeinflussbar sind.

In der Darstellung gemäß Fig. 2 ist ein elektronisches Steuergerät 4 dargestellt, welches über eine zweite Signalleitung 146 mit einem interaktiven Fahrerinformationssystem 3 in Verbindung steht. An dessen Display 3.1, welches zum Beispiel als ein Touchscreen 3.2 ausgebildet sein kann, werden innerhalb eines Auswahlmenüs 140, dem zu einzelnen Funktionen Hilfefunktionen zugeordnet sein können, die jeweiligen SchaltprogrammBausteinen in Blockform angeboten, so dass der Benutzer innerhalb des Auswahlmenüs 140 eine individuelle Konfiguration des elektronischen Getriebesteuergerätes 2 des automatischen Getriebe 1 des Kraftfahrzeuges vornehmen kann, welche seinen individuellen Wünschen und Bedürfnissen entspricht.

Auch in der Darstellung gemäß Fig. 2 sind in schematischer Form am interaktiven Fahrerinformationssystem 3 ein Einführschlitz 144 zur Aufnahme einer Chipkarte 143 vorgesehen. Über die Chipkarte 143 kann eine benutzerindividuell gespeicherte Schaltprogrammkonfiguration in das interaktive Fahrerinformationssystem 3 eingelesen und gespeichert werden, so dass eine entsprechende Konfiguration des elektronischen Getriebesteuergerätes 2 durch Auslesen der auf der Chipkarte 143 in codierter Form vorliegenden Information möglich ist. Darüber hinaus ist in schematischer Darstellung dem interaktiven Fahrerinformationssystem 3 eine als Mikrofon beschaffene Schnittstelle 147 zugeordnet, über welche durch Spracheingabe 148 - in Fig. 2 angedeutet durch den Pfeil - eine Konfiguration des elektronischen Getriebesteuergerätes 2 durch Sprache erfolgen kann.

Die das auf dem Display 3.1 des interaktiven Fahrerinformationssystem 3 anzeigbare Auswahlmenü 140, kann die beispielsweise in Fig. 2 dargestellten Schaltprogramme 10 bis 120 umfassen. In der Konfiguration des Auswahlmenüs 140 gemäß der Darstellung in Fig. 2 sind die einzelnen, aktivierbaren, deaktivierbaren bzw. hinsichtlich ihrer Betriebsparameter veränderbaren Schaltprogramme gleichrangig nebeneinander dargestellt. In diesem Zusammenhang ist unter gleichrangig zu verstehen, dass der Benutzer dem Aufruf des Auswahlmenüs 140 auf dem Display 3.1 des interaktiven Fahrerinformationssystemes 3 keine Vorauswahl zu treffen hat, sondern sich innerhalb des Auswahlmenüs frei bewegen kann und die Konfiguration des elektronischen Getriebesteuergerätes 2 frei vornehmen kann. Eine nach hierarchischen Gesichtspunkten gegliederte Anordnung von aktivierbaren/deaktivierbaren bzw. hinsichtlich ihrer Betriebsparameter veränderbaren Schaltprogramme ist der Darstellung in Fig. 3 weiter unten zu entnehmen.

Auf dem Display 3.1 des interaktiven Fahrerinformationssystems 3 kann innerhalb des Auswahlmenüs 140 zum Beispiel ein Schaltprogramm "Sport" 10 angeboten werden. Innerhalb dieses Schaltprogrammes 10 kann ein frühzeitiges Hochschalten des automatischen Getriebes 1 durch eine im elektronischen Getriebesteuergerät 2 abgespeicherte Kennlinie vermieden werden, so dass sportlich ambitionierte Fahrer das Beschleunigungsvermögen der mit dem automatischen Getriebe 1 an dessen Eingangsseite 1.2 zugeordneten Verbrennungskraftmaschine des Kraftfahrzeuges voll ausnutzen können. Anstelle des in Fig. 2 durch einen Funktionsblock 10 dargestellten Schaltprogrammes "Sport" können weitere, einen sportlichen Fahrstil unterstützende Schaltprogramme dieser Kategorie innerhalb des Auswahlmenüs 140 dem Benutzer angeboten werden, die jedoch in der Darstellung gemäß Fig. 2 nicht aufgeführt sind. Ein Schaltprogramm "Sport" kann innerhalb des Auswahlmenüs 10 am Display 3.1 des interaktiven Fahrerinformationssystemes 3 entweder durch eine Auswahl 10.1 in einen aktivierten Zustand überführt werden oder durch eine Auswahl 10.2 in einen deaktivierten Zustand geschaltet werden.

Innerhalb des Auswahlmenüs 140 auf dem Display 3.1 des interaktiven Fahrerinformationssystemes 3 kann daneben ein Schaltprogramm "Economy" 20 über die Auswahl 20.1 in einen aktivierten Zustand oder über die Auswahl 20.2 in einen deaktivierten Zustand geschaltet werden. Über die in Fig. 2 nicht dargestellte Schnittstelle in Gestalt eines seriell arbeiteten Bussystemes 5, wird die entsprechende Auswahl 20.1 bzw. 20.2 dem elektronischen Getriebesteuergerät 2 des automatischen Getriebes 1 zugeführt. Ein Schaltprogramm "Economy" ist in der Regel derart ausgelegt, dass ein frühzeitiges, die Drehzahl der Verbrennungskraftmaschine begrenzendes Hochschalten erfolgt, so dass eine kraftstoffverbrauchsfreundliche Betriebsweise über das automatische Getriebe 1 an der Verbrennungskraftmaschine des Kraftfahrzeuges erreicht werden kann.

Innerhalb des Auswahlmenüs 140 am Display 3.1 des interaktiven Fahrerinformationssystems 3 kann darüber hinaus ein Schaltprogramm "Kickdown" 30 aktiviert oder deaktiviert werden, wobei durch den Benutzer eine entsprechende Auswahl 30.1 bzw. 30.2 zu treffen ist. Je nach Auswahl 30.1 bzw. 30.2 des Schaltprogrammes "Kickdown" 30 wird beim vollständigen Durchtreten des Gaspedales bis zu dessen Anschlag - was etwa bei Überholvorgängen auf Landstraßen erforderlich sein kann - ein Zurückschalten des automatischen Getriebes 1 erreicht, so dass das Beschleunigungsvermögen der dem automatischen Getriebe 1 zugeordneten Verbrennungskraftmaschine schlagartig zur Verfügung steht.

Darüber hinaus werden dem, das elektronische Getriebesteuergerät 2 über das Auswahlmenü 140 individuell konfigurierenden Benutzer ein Schaltprogramm "Fast-off" 40 angeboten. Dieses Schaltprogramm 40 kann vom Benutzer über die Auswahl 40.1 bzw. 40.2 innerhalb des Auswahlmenüs 140 aktiviert bzw. deaktiviert werden. Das "Fast-off'-Schaltprogramm 40 wird immer dann wirksam, wenn der Fahrer des Kraftfahrzeuges das Gaspedal schnell loslässt. Stört den Fahrer des Kraftfahrzeuges dieses Schaltprogramm 40, so kann er dieses bei der Konfiguration des elektronischen Getriebesteuergerätes 2 des automatischen Getriebes 1 durch die Auswahl 40.2 deaktivieren.

Innerhalb des Auswahlmenüs 140 wird dem Benutzer ferner die Möglichkeit gegeben, ein Schaltprogramm "Berg-ab-Fahrt" 50 zu konfigurieren, d. h. dieses durch die Auswahl 50.1 zu aktivieren bzw. dieses durch die Auswahl 50.2 in einen deaktivierten Zustand zu überführen. Innerhalb des Schaltprogrammes "Berg-ab-Fahrt" kann zum Beispiel ein Hochschalten des automatischen Getriebes 1 des Kraftfahrzeuges verhindert werden, so dass im Schiebebetrieb des Kraftfahrzeuges bei Bergabfahrt die Bremswirkung der Verbrennungskraftmaschine wirksam bleibt und die Bremsanlage des Kraftfahrzeuges vor Überhitzung geschützt werden kann. Ferner steht dem das elektronische Getriebesteuergerät 2 konfigurierenden Benutzer innerhalb des Auswahlmenüs 140 ein Schaltprogramm "Kurve" zur Verfügung, welches durch eine Auswahl 60.1 in einen aktivierten Zustand sowie über eine Auswahl 60.2 in einen deaktivierten Zustand überführt werden kann. Beim Durchfahren von Kurven treten häufig Beschleunigungs- bzw. Bremsphasen auf, um das Kraftfahrzeug durch die Kurven zu steuern. Die dabei zwangsläufig auftretenden Schaltvorgänge können über das elektronische Getriebesteuergerät 2 des automatischen Getriebes 1 an diesem Fahrzustand angepasst werden und frühzeitig oder zu späteren Zeitpunkten während des Fahrzyklusses, d. h. nach dem Durchfahren der Kurve erfolgen.

Dem Benutzer wird darüber hinaus innerhalb des Auswahlmenüs 140 auf dem Display 3.1 des interaktiven Fahrerinformationssystems 3 ein Schaltprogramm "Anhänger" 70 angeboten, welches der Benutzer durch die Auswahl 70.1 in seinen aktivierten Zustand bzw. durch die Auswahl 70.2 in den deaktivierten Zustand überführen kann. Innerhalb des Schaltprogrammes "Anhänger" 70 betreibt das elektronische Getriebesteuergerät 2 entsprechend der Auswahl 70.1 das automatische Getriebe 1 des Kraftfahrzeuges in einem Modus, der sicherstellt, dass die Verbrennungskraftmaschine nicht untertourig, sondern stets im passenden, ein Bewegen der angehängten Last ermöglichenden Zustand betrieben wird und sorgt innerhalb einer Modifikationsstufe bei Bergabfahrten des einen Anhänger ziehenden Kraftfahrzeuges dafür, dass eine erhöhte Bremswirkung von der Verbrennungskraftmaschine auf das Gespann aus ziehendem Kraftfahrzeug und gezogenem Anhänger wirksam bleibt.

Innerhalb eines Schaltprogrammes "Winter" 80 können am elektronischen Getriebesteuergerät 2 des automatischen Getriebes 1 winterliche Straßenverhältnisse berücksichtigt werden. Innerhalb des Schaltprogrammes "Winter" 80 kann zum Beispiel das automatische Getriebe 1 über das elektronische Getriebesteuergerät 2 derart beeinflusst werden, dass ein Anfahren des Kraftfahrzeuges stets im zweiten Gang erfolgt, so das ein Durchdrehen der angetriebenen Räder des Kraftfahrzeuges verhindert wird. Dieses Schaltprogramm "Winter" 80, welches je nach Wetterlage durch den Benutzer gemäß der Auswahl 80.1 aktiviert bzw. der Auswahl 80.2 deaktiviert werden kann, unterstützt die Wirkung eines im Kraftfahrzeug eingesetzten ESP- bzw. ABS-Systems hinsichtlich der Handhabbarkeit des Kraftfahrzeuges in kritischen Fahrsituationen.

Innerhalb eines Schaltprogrammes "Gangzahl-Vorwahl" 90 kann der Benutzer dessen über eine Auswahl 90.1 bzw. 90.2 dessen Aktivierung bzw. dessen Deaktivierung veranlassen. Wird das Schaltprogramm "Gangzahl-Vorwahl im Automatikmodus" 90 aktiviert, kann beispielsweise die standardmäßig konfigurierte, im elektronischen Getriebesteuergerät 2 im Automatikmodus eingestellte Gangzahl 90.1 beibehalten werden. Trifft der Benutzer innerhalb des Auswahlmenüs 140 die Auswahl 90.2 so lässt sich die Gangzahl ändern. Eine Änderung der innerhalb des Automatikmodus verwendeten Gangzahl am automatischen Getriebe 1 kann zu einer Erhöhung 90.3 der eingesetzten Gangzahl oder zu deren Verminderung 90.4 führen. Der das elektronische Getriebesteuergerät 2 konfigurierende Benutzer kann demnach individuell vorwählen, wieviele Gänge am automatischen Getriebe 1 zum Einsatz kommen und welche beispielsweise ein sehr lang übersetzter fünfter oder sechster Gang deaktivierbar sind.

Darüber hinaus steht innerhalb des Auswahlmenüs 140 am Display 3.1 des interaktiven Fahrerinformationssystemes 3 ein Schaltprogramm "Standabkopplung" 100 zur Verfügung, welches bei stehendem Fahrzeug und im Falle einer Abbremsung durch den Fahrer die Kupplung teilweise öffnet. Dadurch wird die Kraft reduziert, mit der das Fahrzeug versucht anzurollen. Diese Kraft wird dadurch hervorgerufen, dass der Drehmomentwandler auf der Antriebsseite mit Leerlaufdrehzahl dreht und auf der Abtriebsseite steht. Wenn der Drehmomentwandler auf der Abtriebsseite nicht steht, sondern sich dreht, reduziert sich das Drehmoment, welches der Drehmomentwandler abgibt. Dies bewirkt einen Komfortvorteil, der Fahrer braucht lediglich leicht anzubremsen, sowie einen Verbrauchsvorteil, da die Verluste im Drehmomentwandler geringer sind.

Über die Auswahl 100.1 bzw. 100.2 kann dieses Schaltprogramm "Standabkopplung" 100 aktiviert bzw. deaktiviert werden.

Innerhalb des Auswahlmenüs 140 am Display 3.1 des interaktiven Fahrerinformationssystems 3 kann ferner innerhalb eines Schaltprogrammes 110 "Gangwechselgeschwindigkeit" durch eine Auswahl 110.1 bzw. 110.4 die Geschwindigkeit des Gangwechsels für Rückschaltungen verändert werden. Eine Variation der Gangwechselgeschwindigkeit kann sowohl zu einer Erhöhung 110.2 der Geschwindigkeit des Gangwechsels als auch zur Verringerung 110.3 der Geschwindigkeit des Gangwechsels führen. Im gleichen Sinne kann die Geschwindigkeit des Gangwechsels für Hochschaltungen durch die Auswahl 110.5 erhöht oder durch die Auswahl 110.6 abgesenkt werden. Im Auswahlmenü 140 am Display 3.1 des interaktiven Fahrerinformationssystems 3 kann ferner innerhalb des Schaltprogrammes 110 durch eine Auswahl 110.1 bzw. 110.4 die Geschwindigkeit des Gangwechsels oder auch die Geschwindigkeit der Übersetzungsänderungen bei CVT-Getrieben vom Fahrer verändert werden. So kann ein eher komfortorientierter Fahrer einen langsamen Gangwechsel einstellen und ein eher sportlichorientierter Fahrer einen schnellen Gangwechsel herbeiführen. Die Auswahl erfolgt zum Beispiel getrennt nach Hoch- und Rückschaltungen bzw. abhängig vom Schaltprogramm und vom einzulegenden Gang.

Innerhalb des Auswahlmenüs 140 am Display 3.1 des Fahrerinformationssystems 3 kann darüber hinaus eine Funktion aktiviert bzw. deaktiviert werden, mit welcher eine Fahrertyperkennung durchführbar ist. Aus dem bisherigen Fahrstil des das Kraftfahrzeuges benutzenden Fahrers kann durch die Häufigkeit der Bremsvorgänge bzw. anderer Fahrmanöver auf den Fahrstil des Fahrers zurückgeschlossen werden. Die Funktion "Fahrertyperkennung" 120 ist als eine Lernfunktion anzusehen. Eine Fahrertyperkennung bewertet anhand der Fahreraktionen, ob der Fahrer einen bestimmten Fahrstil hat. Im Allgemeinen wird zwischen ökonomischem und sportlichem Fahrertyp unterschieden. Charakteristisch für die Fahrertyperkennung ist zum Beispiel, mit wie viel Gas der Fahrer anfährt, ob er oft mit viel Gas (bezogen auf die Fahrzeuggeschwindigkeit) fährt oder mit eher konstantem Gaspedal, ob er oft den Kick-down-Schalter aktiviert, oft die Fast-off-Funktion aktiviert, eine hohe Querbeschleunigung in Kurven hat usw.. Je nach erkanntem Fahrertyp wird automatisch ein ökonomisches oder ein sportliches Schaltprogramm verwendet. Mit der Konfigurierbarkeit der Fahrertyperkennung gemäß des erfindungsgemäßen Verfahrens kann die Wirkung der Fahrertyperkennung zum Beispiel ausgeschaltet oder in ihrer Wirkung vermindert werden.

Schließlich kann innerhalb des Auswahlmenüs 140 am Display 3.1 des interaktiven Fahrerinformationssystems 3 ein Schaltprogramm "Gangzahlvorwahl manuelles Schalten" vorgenommen werden. Innerhalb dieses Schaltprogrammes können dem automatischen Getriebe 1 über das elektronische Getriebesteuergerät 2 die Vornahme von Schaltvorgängen durch den Fahrer vorgegeben sein; d. h. der Fahrer gibt die Schaltbefehle selbst vor. Dadurch werden innerhalb des elektronischen Getriebesteuergerätes 2 abgelegte Schaltkennlinien deaktiviert, wie ein individuelles Schalten ähnlich eines manuellen Schaltgetriebes jedoch unter Einsatz eines automatischen Getriebes 1 vorgenommen werden kann.

Die in Fig. 2 entsprechend ihrer numerischen Reihenfolge angeführten Schaltprogramme 10, 20, 30, 40, 50, 60, 70, 80, 90, 100, 110 und 120 lassen sich untereinander kombinieren, so dass beispielsweise das elektronische Getriebesteuergerät an winterliche Straßenverhältnisse, an Passfahrten, an Fahrten mit und ohne Anhänger, sowie an kurvenreiche Strecken im Gebirge mit langen Anstiegs- bzw. langen Gefällepassagen angepasst werden kann.

In Fig. 2 ist die Konfiguration des elektronischen Getriebesteuergerätes 2 anhand eines Displays 3.1 eines interaktiven Fahrerinformationssystemes 3 dargestellt, welches fest innerhalb eines Kraftfahrzeuges installiert ist. Daneben lässt sich das elektronische Getriebesteuergerät 2 auch über die Schnittstelle 4.3 entsprechend konfigurieren. Dazu kann die Schnittstelle 4.3 am elektronischen Steuergerät 4 über ein Mobiltelefon 141 bzw. über einen das Personal-Digital-Assistant 142 direkt adressiert werden. Über diese mobilen Komponenten lässt sich das elektronische Getriebesteuergerät 2 entsprechend den individuellen Wünschen eines Benutzers des Kraftfahrzeuges, beispielsweise vor Antritt einer Urlaubsfahrt, konfigurieren. Benutzen das Kraftfahrzeug andere Personen als der Fahrer, der das Kraftfahrzeug gewöhnlich nutzt, kann eine Konfiguration der Schaltprogramme 10, 20, 30, 40, 50, 60, 70, 80, 90, 100, 110 und 120 über benutzerindividuelle Chipkarten 143 erfolgen, die in einen Einführschlitz 144 am interaktiven Fahrerinformationssystem am System einführbar sind. Der auf den Chipkarten 143 in codierter Form gespeicherte Konfigurationswunsch kann über das elektronische Steuergerät 4 über das serielle Bussystem 5 direkt an das elektronische Getriebesteuergerät 2 des automatischen Getriebes 1 übertragen werden.

Neben der Auswahl der einzelnen Schaltprogramme 10, 20, 30, 40, 50, 60, 70, 80, 90, 100, 110, 120 innerhalb eines Auswahlmenüs 140 an einem Touchscreen 3.2 des interaktiven Fahrerinformationssystems 3, kann die Auswahl der jeweiligen Schaltprogramme auch über Spracheingabe 148 erfolgen. Dazu kann das interaktive Fahrerinformationssystem 3 eine als Mikrofon 147 beschaffene Schnittstelle umfassen, so dass der Benutzer des interaktiven Fahrerinformationssystems 3 durch Bejahung bzw. Verneinung innerhalb des Auswahlmenüs 140 eine individuelle Konfiguration des elektronischen Getriebesteuergerätes 2 vornehmen kann, ohne dass das Display 3.1 des interaktiven Fahrerinformationssystemes als Touchscreen 3.2 ausgestaltet sein müsste.

Fig. 3 zeigt die Schaltprogrammfunktionsblöcke in hierarchischer Anordnung zu einzelnen "Funktionspaketen" zusammengefasst, die durch den Benutzer des Kraftfahrzeuges individuell konfigurierbar sind.

In der Darstellung gemäß Fig. 3 sind innerhalb des Auswahlmenüs 140, welches am Display 3.1 des interaktiven Fahrerinformationssystems 3 angeboten wird, das Schaltprogramm 10 "Sport", sowie das Schaltprogramm "Economy" 20 hierarchisch übergeordnet ausgewählt.

Das ausgewählte Schaltprogramm "Sport" 10 kann gemäß dieser Ausführungsvariante des erfindungsgemäß vorgeschlagenen Verfahrens ein als Unterprogramm zu betrachtendes Schaltprogramm "Kickdown" 30 umfassen, welches durch eine Auswahl 30.1 bzw. durch eine Auswahl 30.2 innerhalb des Auswahlmenüs 140 aktivierbar bzw. deaktivierbar ist. Ferner kann als Unterprogramm zum Schaltprogramm "Sport" 10 das Schaltprogramm "Fast-off" 40 durch eine entsprechende Auswahl 40.1 bzw. 40.2 aktiviert bzw. deaktiviert werden. Schließlich können durch die Aktivierung bzw. Deaktivierung der Schaltprogramme "Gangzahlvorwahl Automatikmodus" 90 bzw. Schaltprogramm "Gangwechselgeschwindigkeit" 110 weitere Konfigurationsmöglichkeiten angeboten werden, von denen der Fahrer bei der Konfiguration des elektronischen Getriebesteuergerätes 2 Gebrauch machen kann, aber nicht notwendigerweise Gebrauch machen muss. So kann beispielsweise die im Schaltprogramm "Gangzahlvorwahl Automatikmodus" 90 vorgegebene Gangzahl 90.1 beibehalten werden; daneben kann diese durchaus innerhalb einer Auswahl 90.2 geändert werden, d. h. erhöht oder abgesenkt werden. Dies ist den individuellen Vorlieben des das elektronische Getriebesteuergerät 2 konfigurierenden Benutzers überlassen und in sein Ermessen gestellt. Demnach lässt sich ein auf den Benutzer maßgeschneidertes Schaltprogramm "Sport" 10 konfigurieren, welches dem Benutzer die Möglichkeit eröffnet, aus dem dem übergeordneten Schaltprogramm "Sport" 10 untergeordneten Schaltprogrammen 30, 40, 90 bzw. 110 eine entsprechende Auswahl durch deren Aktivierung bzw. Deaktivierung zu treffen.

In der Darstellung gemäß Fig. 3 ist darüber hinaus das Schaltprogramm "Economy" 20 als hierarchisch übergeordnetes Schaltprogramm herausgegriffen. Dem Schaltprogramm "Economy" 20 können mehrere Schaltprogramme 30, 40, 50, 60, 70, 80 bzw. 110 als hierarchisch untergeordnete Schaltprogramme nachgeordnet sein. Über die Benutzerführung innerhalb des am Display 3.1 des interaktiven Fahrerinformaitonssystemes 3 angezeigten Auswahlmenüs 140 kann dem Benutzer, d. h. der das elektronische Getriebesteuergerät 2 konfigurierenden Person, das Schaltprogramm "Kickdown" 30, das Schaltprogramm "Fast-off" 40, das Schaltprogramm "Bergabfahrt" 50, das Schaltprogramm "Kurvenfahrt" 60, das Schaltprogramm "Anhänger" 70, das Schaltprogramm "Winter" 80 sowie das Schaltprogramm 110 "Gangwechselgeschwindigkeit" angeboten werden. Entsprechend der zu treffenden Auswahl 30.1, 30.2 in Bezug auf das Schaltprogramm 30 bzw. der Auswahlmöglichkeiten 40. 1 bzw. 40.2 in Bezug auf das Schaltprogramm 40, sowie der Auswahlmöglichkeiten 50.1 bzw. 50.2 für das Schaltprogramm 50 und den Auswahlmöglichkeiten 60.1 bzw. 60.2 für das Schaltprogramm 60 kann der Benutzer innerhalb des Auswahlmenüs 140 die Aktivierung bzw. Deaktivierung des betreffenden Schaltprogrammes auswählen.

In analoger Weise kann der Benutzer durch entsprechende Auswahl 70.1 bzw. 70.2 das Schaltprogramm "Anhänger" 70 aktivieren oder deaktivieren oder auch das Schaltprogramm "Winter" 80 entsprechend der Wetterverhältnisse und des Straßenzustandes aktivieren oder deaktivieren. Darüber hinaus wird innerhalb des hierarchisch übergeordneten Schaltprogrammes "Economy" abgefragt, ob innerhalb des untergeordneten Schaltprogrammes 110 "Gangwechselgeschwindigkeit" die Hoch- bzw. Rückschalt-Geschwindigkeit 110.1 bzw. 110.4 verändert werden soll. Der Benutzer kann von dieser Variation der Konfiguration des elektronischen Getriebesteuergerätes Gebrauch machen, er muss es aber nicht notwendigerweise tun, dies ist vielmehr völlig in sein Ermessen gestellt. Mit dem erfindungsgemäß vorgeschlagenen Verfahren kann der Fahrer des Kraftfahrzeuges das Schaltverhalten des automatischen Getriebes 1 entsprechend seiner persönlichen Vorlieben beliebig konfigurieren. Die Aktivierung bzw. Deaktivierung der einzelnen Schaltprogramme 10, 20, 30, 40, 50, 60, 70, 80, 90, 100, 110, 120 kann zum Beispiel über das Auswahlmenü 140 am Display 3.1 des interaktiven Fahrerinformationssystemes 3 erfolgen. Zu den einzelnen angebotenen Schaltprogrammen sind Hilfefunktionen abrufbar, um die Bedeutung der Schaltprogramme 10, 20, 30, 40, 50, 60, 70, 80, 90, 100, 110, 120 innerhalb des Auswahlmenüs 140 näher zu erläutern. Anstelle eines in den Fig. 2 und 3 in Zusammenhang mit dem Auswahlmenü 140 dargestellten interaktiven Fahrerinformationssystemes, welches im Fahrzeug fest installiert ist, kann die Konfiguration des elektronischen Getriebesteuergerätes 2 auch über ein Mobiltelefon 141 oder einen Personal-Digital-Assistant 142 via Schnittstelle 2.3 am elektronischen Getriebesteuergerät 2 erfolgen. Diese Schnittstelle 2.3 (Blue tooth) kann auch am zentralen Fahrzeugcomputer liegen. Die zur benutzerindividuellen Konfiguration des elektronischen Getriebesteuergerätes 2 erforderlichen Daten, können auch auf eine Chipkarte 143 gespeichert sein, die eine nutzerabhängige Einstellung, d. h. Konfiguration des elektronischen Getriebesteuergerätes 2 des automatischen Getriebes 1 erlaubt.

Eine Änderung der Konfiguration des elektronischen Getriebesteuergerätes während der Fahrt wird vorzugsweise vermieden. Eine Übernahme von Änderungen während der Fahrt erfolgt nicht bzw. nur nach einer ausdrücklichen Bestätigung durch den Fahrer des Kraftfahrzeuges. Die Konfiguration des elektronischen Getriebesteuergerätes 2 für das automatische Getriebe 1 des Kraftfahrzeuges kann zum Beispiel nach dem Einschalten der Zündung vom Steuergerät 4 des interaktiven Fahrerinformationssystemes 3 an das elektronische Getriebesteuergerät 2 übermittelt werden. Änderungen der Konfiguration werden im laufenden Betrieb über ein beispielsweise als serielles Bussystem 5 beschaffenes Übertragungselement übermittelt. Die Kommunikation zwischen dem elektronischen Getriebesteuergerät 2 und dem interaktiven Fahrerinformationssystem 3 erfolgt vorzugsweise auch über dieses beispielsweise als CAN beschaffene serielle Bussystem 5 innerhalb des Kraftfahrzeuges.

### Bezugszeichenliste

- 1: automatisches Getriebe
- 1.1: Abtriebsseite
- 1.2: Antriebsseite
- 2: elektronisches Getriebesteuergerät
- 2.1: Eingangsseite
- 2.2.: Ausgangsseite

- 3: interaktives Fahrerinformationssystem
- 3.1: Display
- 3.2: Touchscreen
- 4: elektronisches Steuergerät
- 4.3: Schnittstelle Mobiltelefon / PDA
- 5: serielles Bussystem (CAN)
- 6: Kommunikationsbaustein für Mobiltelefon / PDA

- 10: Schaltprogramm "Sport"
- 10.1: aktivierter Zustand
- 10.2: deaktivierter Zustand

- 20.: Schaltprogramm "Economy"
- 20.1: aktivierter Zustand
- 20.2: deaktivierter Zustand

- 30: Schaltprogramm "Kick-down"
- 30.1: aktivierter Zustand
- 30.2: deaktivierter Zustand

- 40: Schaltprogramm "Fast-off"
- 40.1: aktivierter Zustand
- 40.2: deaktivierter Zustand

- 50: Schaltprogramm "Berg-ab-Fahrt"
- 50.1: aktivierter Zustand
- 50.2: deaktivierter Zustand

- 60: Schaltprogramm "Kurvenfahrt"
- 60.1: aktivierter Zustand
- 60.2: deaktivierter Zustand

- 70: Schaltprogramm "Anhänger"
- 70.1: aktivierter Zustand
- 70.2: deaktivierter Zustand

- 80: Schaltprogramm "Winter"
- 80.1: aktivierter Zustand
- 80.2: deaktivierter Zustand

- 90: Schaltprogramm "Gangzahlvorwahl Automatikmodus"
- 90.1: Beibehaltung Gangzahl
- 90.2: Änderung Gangzahl
- 90.3: Steigerung Gangzahl
- 90.4: Verminderung Gangzahl

- 100: Schaltprogramm "Standabkopplung"
- 100.1: aktivierter Zustand
- 100.2: deaktivierter Zustand

- 110: Schaltprogramm "Gangwechselgeschwindigkeit"
- 110.1: Schließgeschwindigkeit verändern
- 110.2: Schließgeschwindigkeit erhöhen
- 110.3: Schließgeschwindigkeit vermindern
- 110.4: Öffnungsgeschwindigkeit verändern
- 110.5: Öffnungsgeschwindigkeit steigern
- 110.6: Öffnungsgeschwindigkeit verringern

- 120: Fahrertyperkennungsfunktion
- 120.1: aktivierter Zustand
- 120.2: deaktivierter Zustand

- 140: Auswahlmenü
- 141: Mobiltelefon
- 142: PDA (Personal-Digital-Assistant)

- 143: Chipkarte
- 144: Einführschlitz (Eingabe Schnittstelle)
- 145: erste Signalleitung
- 146: zweite Signalleitung
- 147: Mikrofon
- 148: Spracheingabe

## Patentansprüche

1. Verfahren zur Konfiguration eines elektronischen Getriebesteuergerätes (2) eines automatischen Getriebes (3) mit einer oder mehreren wählbaren Übersetzungen in einem Kraftfahrzeug mit nachfolgenden Verfahrensschritten:
- innerhalb eines elektronischen Getriebesteuergerätes (2) werden Schaltprogramme zur Einstellung der Übersetzung des Getriebes (3) gespeichert,
- auswählbare Schaltprogramme (10, 20, 30, 40, 50, 60, 70, 80, 90, 100, 110, 120) werden dem Fahrer an einer Eingabeeinheit (3, 140, 141, 142) in Form eines Auswahlmenüs (140) zur Konfiguration eines elektronischen Getriebesteuergerätes (2) angeboten,
- die Eingabeeinheit (3, 140, 141, 142) erfasst eine individuell zusammengestellte Auswahl von Schaltprogrammen aus den angebotenen Schaltprogrammen (10, 20, 30, 40, 50, 60, 70, 80, 90, 100, 110, 120), die vom Fahrer durch Aktivierung oder Deaktivierung der angebotenen Schaltprogramme und/oder durch eine an der Eingabeeinheit ausgewählte Veränderung wenigstens eines Betriebsparameters eines angebotenen Schaltprogramms vor Fahrtbeginn vorgenommen wird,
- es erfolgt eine Datenübertragung der individuell zusammengestellten Auswahl von Schaltprogrammen von der Eingabeeinheit (3, 140, 141, 142) an das elektronische Getriebesteuergerät (2) und
- die im Getriebesteuergerät gespeicherten Schaltprogramme werden entsprechend der vom Fahrer individuell zusammengestellten Auswahl von Schaltprogrammen konfiguriert
**dadurch gekennzeichnet, dass** die Konfiguration des elektronischen Getriebesteuergerätes (2) über ein Mobiltelefon (141) oder über ein Personal-Digital-Assistent (142) als Eingabeeinheit erfolgt.

2. Verfahren zur Konfiguration eines elektronischen Getriebesteuergerätes (2) eines automatischen Getriebes (3) mit einer oder mehreren wählbaren Übersetzungen in einem Kraftfahrzeug mit nachfolgenden Verfahrensschritten:
- innerhalb eines elektronischen Getriebesteuergerätes (2) werden Schaltprogramme zur Einstellung der Übersetzung des Getriebes (3) gespeichert,
- auswählbare Schaltprogramme (10, 20, 30, 40, 50, 60, 70, 80, 90, 100, 110, 120) werden dem Fahrer an einer Eingabeeinheit (3, 140, 141, 142) in Form eines Auswahlmenüs (140) zur Konfiguration eines elektronischen Getriebesteuergerätes (2) angeboten,
- die Eingabeeinheit (3, 140, 141, 142) erfasst eine individuell zusammengestellte Auswahl von Schaltprogrammen aus den angebotenen Schaltprogrammen (10, 20, 30, 40, 50, 60, 70, 80, 90, 100, 110, 120), die vom Fahrer durch Aktivierung oder Deaktivierung der angebotenen Schaltprogramme und/oder durch eine an der Eingabeeinheit ausgewählte Veränderung wenigstens eines Betriebsparameters eines angebotenen Schaltprogramms vor Fahrtbeginn vorgenommen wird,
- es erfolgt eine Datenübertragung der individuell zusammengestellten Auswahl von Schaltprogrammen von der Eingabeeinheit (3, 140, 141, 142) an das elektronische Getriebesteuergerät (2) und
- die im Getriebesteuergerät gespeicherten Schaltprogramme werden entsprechend der vom Fahrer individuell zusammengestellten Auswahl von Schaltprogrammen konfiguriert,
wobei die Schaltprogramme (10, 20, 30, 40, 50, 60, 70, 80, 90, 100, 110, 120) wenigstens eines der folgenden Schaltprogramme umfassen: ein Schaltprogramme "Gangzahlvorwahl Automatikgetriebe" (90), ein Schaltprogramm "Schaltgeschwindigkeitsänderung Gangwechselgeschwindigkeit" (110), eine Funktion "Fahrertyperkennung" (120),
**dadurch gekennzeichnet, dass** innerhalb des Schaltprogramms Schaltgeschwindigkeitsänderung Gangwechselgeschwindigkeit (110) die Schaltgeschwindigkeit des Gangwechsels (110.1) veränderbar ist und sowohl die Rückschaltgeschwindigkeit (110.2, 110.3) erhöht oder vermindert als auch die Hochschaltgeschwindigkeit (110.4, 110.5) erhöht oder vermindert werden kann.

3. Verfahren gemäß Anspruch 1, **dadurch gekennzeichnet, dass** die Konfiguration des elektronischen Getriebesteuergerätes (2) über eine Schnittstelle (2.3) erfolgt, die über ein Mobiltelefon (141) oder über einen Personal-Digital-Assistant (142) adressierbar ist.

4. Verfahren gemäß Anspruch 1 oder 2, **dadurch gekennzeichnet, dass** die Schaltprogramme wenigstens eines der folgenden Schaltprogramme umfassen: ein Schaltprogramm "Sport" (10), ein Schaltprogramm "Economy" (20), ein Schaltprogramm "Kick-down" (30), ein Schaltprogramm "Fast-off" (40), ein Schaltprogramm "Berg-ab-Fahrt" (50), ein Schaltprogramm "Kurvenfahrt" (60)" ein Schaltprogramm "Anhänger" (70), ein Schaltprogramm "Winter" (80), ein Schaltprogramm "Standäbkopplung" (100).

5. Verfahren gemäß Anspruch 1 oder 2, **dadurch gekennzeichnet, dass** die Schaltprogramme (10, 20, 30, 40, 50, 60, 70, 80, 90, 100, 110, 120) wenigstens eines der folgenden Schaltprogramme umfassen: ein Schaltprogramm "Gangzahlvorwahl Automatikgetriebe" (90), ein Schaltprogramm "Schaltgeschwindigkeitsänderung Gangwechselgeschwindigkeit" (110), eine Funktion "Fahrertyperkennung" (120) umfassen.

6. Verfahren gemäß Anspruch 5, **dadurch gekennzeichnet, dass** innerhalb der Schaltprogramme (90, 110) eine Veränderung der Gangzahl eines Getriebes (1) in einer Änderungsstufe (90.2) individuell veränderbar ist und sowohl gesteigert als auch vermindert werden kann.

7. Verfahren nach Anspruch 4, **dadurch gekennzeichnet, dass** die auswählbaren Schaltprogramme eine Fahrertyperkennung (120) umfassen, die aktivierbar (120.1) oder teilweise deaktivierbar (120.2) ist.

8. Verfahren gemäß der Ansprüche 4 und 5, **dadurch gekennzeichnet, dass** aus den auswählbaren Schaltprogrammen (10, 20, 30, 40, 50, 60, 70, 80, 90, 100, 110, 120) das Schaltprogramm "Sport" (10) oder das Schaltprogramm "Economy" (20) auswählbar sind, die innerhalb untergeordneter Hierachiestufen mit weiteren, der auswählbaren Schaltprogramme (30, 40, 50, 60, 70, 80, 90, 100, 110, 120) fahrer individuell verknüpfbar sind.

## Claims

1. Method for configuring an electronic transmission control device (2) of an automatic transmission (3) with one or more selectable transmission ratios in a motor vehicle having the following method steps:
- gear shift programmes for setting the transmission ratio of the transmission (3) are stored inside an electronic transmission control device (2),
- selectable gear shift programmes (10, 20, 30, 40, 50, 60, 70, 80, 90, 100, 110, 120) are offered to the driver at an input unit (3, 140, 141, 142) in the form of a selection menu (140) for configuring an electronic transmission control device (2),
- the input unit (3, 140, 141, 142) senses an individually compiled selection of the gear shift programmes from the offered gear shift programmes (10, 20, 30, 40, 50, 60, 70, 80, 90, 100, 110, 120) which is made by the driver by activating or deactivating the offered gear shift programmes and/or by making a change, selected at the input unit, to at least one operating parameter of an offered gear shift programme before the start of the journey,
- data relating to the individually compiled selection of gear shift programmes is transmitted from the input unit (3, 140, 141, 142) to the electronic transmission control device (2), and
- the gear shift programmes stored in the transmission control device are configured in accordance with the selection of gear shift programmes which is compiled individually by the driver,
**characterized in that** the electronic transmission control device (2) is configured by means of a mobile phone (141) or by means of a personal digital assistant (142) as input unit.

2. Method for configuring an electronic transmission control device (2) of an automatic transmission (3) with one or more selectable transmission ratios in a motor vehicle having the following method steps:
- gear shift programmes for setting the transmission ratio of the transmission (3) are stored inside an electronic transmission control device (2),
- selectable gear shift programmes (10, 20, 30, 40, 50, 60, 70, 80, 90, 100, 110, 120) are offered to the driver at an input unit (3, 140, 141, 142) in the form of a selection menu (140) for configuring an electronic transmission control device (2),
- the input unit (3, 140, 141, 142) senses an individually compiled selection of the gear shift programmes from the offered gear shift programmes (10, 20, 30, 40, 50, 60, 70, 80, 90, 100, 110, 120) which is made by the driver by activating or deactivating the offered gear shift programmes and/or by making a change, selected at the input unit, to at least one operating parameter of an offered gear shift programme before the start of the journey,
- data relating to the individually compiled selection of gear shift programmes is transmitted from the input unit (3, 140, 141, 142) to the electronic transmission control device (2), and
- the gear shift programmes stored in the transmission control device are configured in accordance with the selection of gear shift programmes which is compiled individually by the driver,
wherein
the gear shift programmes (10, 20, 30, 40, 50, 60, 70, 80, 90, 100, 110, 120) comprise at least one of the following gear shift programmes: an "integer preselection automatic transmission" gear shift programme (90), a "gear shift speed change shifting operation speed" gear shift programme (110), a "driver type identification" function (120),
**characterized in that** within the "gear shift speed change shifting operation speed" gear shift programme (110) the gear shift speed of the shifting operation (110.1) can be changed and both the shifting down speed (110.2, 110.3) can be increased or reduced and the shifting up speed (110.4, 110.5) can be increased or reduced.

3. Method according to Claim 1, **characterized in that** the electronic transmission control device (2) is configured via an interface (2.3) which can be addressed by means of a mobile phone (141) or by means of a personal digital assistant (142).

4. Method according to Claim 1 or 2, **characterized in that** the gear shift programmes comprise at least one of the following gear shift programmes: a "sport" gear shift programme (10), an "economy" gear shift programme (20), a "kick down" gear shift programme (30), a "fast-off" gear shift programme (40), a "downhill travel" gear shift programme (50), a "cornering" gear shift programme (60), a "trailer" gear shift programme (70), a "winter" gear shift programme (80), a "stationary declutching" gear shift programme (100).

5. Method according to Claim 1 or 2, **characterized in that** the gear shift programmes (10, 20, 30, 40, 50, 60, 70, 80, 90, 100, 110, 120) comprise at least one of the following gear shift programmes: an "integer preselection automatic transmission" gear shift programme (90), a "gear shift speed change shifting operation speed" gear shift programme (110), a "driver type identification" function (120).

6. Method according to Claim 5, **characterized in that** within the gear shift programmes (90, 110) a change in the number of speeds of a transmission (1) can be changed individually in a change stage (90.2) and can either be increased or reduced.

7. Method according to Claim 4, **characterized in that** the selectable gear shift programmes comprise a driver type identification (120) which can be activated (120.1) or partially deactivated (120.2).

8. Method according to Claims 4 and 5, **characterized in that** the "sport" gear shift programme (10) or the "economy" gear shift programme (20) can be selected from the selectable gear shift programmes (10, 20, 30, 40, 50, 60, 70, 80, 90, 100, 110, 120) and can be logically combined on a driver-specific basis with other selectable gear shift programmes (30, 40, 50, 60, 70, 80, 90, 100, 110, 120) within subordinate hierarchy stages.

## Revendications

1. Procédé de configuration d'un appareil de commande de boîte de vitesses électronique (2) d'une boîte de vitesses automatique (3) comprenant un ou plusieurs rapports de démultiplication sélectionnables dans un véhicule automobile, comprenant les étapes de procédé suivantes :
- des programmes de commutation pour l'ajustement du rapport de multiplication de la boîte de vitesses (3) sont stockés à l'intérieur d'un appareil de commande de boîte de vitesses électronique (2),
- des programmes de commutation sélectionnables (10, 20, 30, 40, 50, 60, 70, 80, 90, 100, 110, 120) sont offerts au conducteur sur une unité d'entrée (3, 140, 141, 142) sous la forme d'un menu de sélection (140) pour la configuration d'un appareil de commande de boîte de vitesses électronique (2),
- l'unité d'entrée (3, 140, 141, 142) détecte une sélection constituée individuellement de programmes de commutation à partir des programmes de commutation offerts (10, 20, 30, 40, 50, 60, 70, 80, 90, 100, 110, 120), qui est effectuée avant le démarrage par le conducteur en activant ou désactivant les programmes de commutation offerts et/ou par une modification sélectionnée sur l'unité d'entrée d'au moins un paramètre de fonctionnement d'un programme de commutation offert,
- un transfert de données de la sélection constituée individuellement des programmes de commutation est effectué par l'unité d'entrée (3, 140, 141, 142) sur l'appareil de commande de boîte de vitesses électronique (2), et
- les programmes de commutation stockés dans l'appareil de commande de boîte de vitesses sont configurés en fonction de la sélection de programmes de commutation constituée individuellement par le conducteur,
**caractérisé en ce que** la configuration de l'appareil de commande de boîte de vitesses électronique (2) a lieu par le biais d'un téléphone portable (141) ou par le biais d'un assistant personnel numérique (142) en tant qu'unité d'entrée.

2. Procédé pour la configuration d'un appareil de commande de boîte de vitesses électronique (2) d'une boîte de vitesses automatique (3) avec un ou plusieurs rapports de multiplication sélectionnables dans un véhicule automobile, comprenant les étapes de procédé suivantes :
- des programmes de commutation pour l'ajustement du rapport de multiplication de la boîte de vitesses (3) sont stockés à l'intérieur d'un appareil de commande de boîte de vitesses électronique (2),
- des programmes de commutation sélectionnables (10, 20, 30, 40, 50, 60, 70, 80, 90, 100, 110, 120) sont offerts au conducteur sur une unité d'entrée (3, 140, 141, 142) sous la forme d'un menu de sélection (140) pour la configuration d'un appareil de commande de boîte de vitesses électronique (2),
- l'unité d'entrée (3, 140, 141, 142) détecte une sélection constituée individuellement de programmes de commutation à partir des programmes de commutation offerts (10, 20, 30, 40, 50, 60, 70, 80, 90, 100, 110, 120), qui est effectuée avant le démarrage par le conducteur en activant ou désactivant les programmes de commutation offerts et/ou par une modification sélectionnée sur l'unité d'entrée d'au moins un paramètre de fonctionnement d'un programme de commutation offert,
- un transfert de données de la sélection constituée individuellement des programmes de commutation est effectué par l'unité d'entrée (3, 140, 141, 142) sur l'appareil de commande de boîte de vitesses électronique (2), et
- les programmes de commutation stockés dans l'appareil de commande de boîte de vitesses sont configurés en fonction de la sélection de programmes de commutation constituée individuellement par le conducteur,
dans lequel les programmes de commutation (10, 20, 30, 40, 50, 60, 70, 80, 90, 100, 110, 120) comprennent au moins l'un des programmes de commutation suivantes : un programme de commutation "présélection du nombre de rapports de la boîte de vitesses automatique" (90), un programme de commutation "variation de la vitesse de commutation de la vitesse de changement de rapport" (110), une fonction "reconnaissance du type de conducteur" (120),
**caractérisé en ce qu'**à l'intérieur du programme de commutation "variation de la vitesse de commutation de la vitesse de changement de rapport" (110), on peut modifier la vitesse de commutation du changement de rapport (110.1), et l'on peut augmenter la vitesse de rétrogradage (110.2, 110.3) ou la réduire, et augmenter ou réduire la vitesse de passage au rapport supérieur (110.4, 110.5).

3. Procédé selon la revendication 1, **caractérisé en ce que** la configuration de l'appareil de commande de boîte de vitesses électronique (2) a lieu par le biais d'une interface (2.3), à laquelle on peut accéder par le biais d'un téléphone portable (141) ou d'un assistant personnel numérique (142).

4. Procédé selon la revendication 1 ou 2, **caractérisé en ce que** les programmes de commutation comprennent au moins l'un des programmes de commutation suivants : un programme de commutation "sport" (10), un programme de commutation "économie" (20), un programme de commutation "pied au plancher" (30), un programme de commutation "démarrage rapide" (40), un programme de commutation "descente de montagne" (50), un programme de commutation "conduite en virages" (60), un programme de commutation "remorquage" (70), un programme de commutation "hiver" (80), et un programme de commutation "désengagement stationnaire" (100).

5. Procédé selon la revendication 1 ou 2, **caractérisé en ce que** les programmes de commutation (10, 20, 30, 40, 50, 60, 70, 80, 90, 100, 110, 120) comprennent au moins l'un des programmes de commutation suivants : un programme de commutation "présélection du nombre de rapports de la boîte de vitesses automatique" (90), un programme de commutation "variation de vitesse de commutation de la vitesse de changement de rapport" (110), et une fonction de "reconnaissance du type de conducteur" (120).

6. Procédé selon la revendication 5, **caractérisé en ce qu'**à l'intérieur des programmes de commutation (90, 110), une variation du nombre de rapports d'une boîte de vitesses (1) peut être modifiée individuellement dans un étage de variation (90.2) et peut être aussi bien augmentée que diminuée.

7. Procédé selon la revendication 4, **caractérisé en ce que** les programmes de commutation sélectionnables comprennent une reconnaissance du type de conducteur (120) qui peut être activée (120.1) ou partiellement désactivée (120.2).

8. Procédé selon l'une quelconque des revendications 4 et 5, **caractérisé en ce que** le programme de commutation "sport" (10) ou le programme de commutation "économie" (20) peuvent être sélectionnés à partir des programmes de commutation sélectionnables (10, 20, 30, 40, 50, 60, 70, 80, 90, 100, 110, 120), lesquels peuvent être connectés, de manière spécifique au conducteur, à l'intérieur d'étages hiérarchiques subordonnés, à d'autres programmes des programmes de commutation sélectionnables (30, 40, 50, 60, 70, 80, 90, 100, 110, 120).
